# EUROPEAN PATENT SPECIFICATION

(11) **EP 1 298 966 B1**
(45) Date of publication and mention of the grant of the patent: **17.10.2007**
(21) Application number: 02255619.5
(22) Date of filing: 12.08.2002
(51) Int. Cl.: H05H 1/34

(54) **Electrode component thermal bonding**
Heissverschweissbarkeit von Elektrodenbauelemente
Collage thermique des composants d'une électrode

(30) Priority: 26.09.2001 US 964072
(43) Date of publication of application: 02.04.2003
(73) Proprietor: THE ESAB GROUP, INC., Florence, South Carolina 29501 (US)
(72) Inventor: Diehl, Gregory W., Florence, South Carolina 29501 (US); McBennett, Michael C., Lamar, South Carolina 29069 (US)
(74) Representative: MacDougall, Donald Carmichael

(56) References cited:
- EP-A- 0 434 263
- EP-A- 0 465 109
- EP-A- 0 822 736
- WO-A-00/38485
- US-A- 4 766 349
- US-A- 5 097 111
- US-A- 5 857 888
- US-A- 6 114 650
- US-B1- 6 268 583

## Description

### FIELD OF THE INVENTION

The present invention relates to plasma arc torches and, more particularly, to a method of forming an electrode for supporting an electric arc in a plasma arc torch.

### BACKGROUND OF THE INVENTION

Plasma arc torches are commonly used for the working of metals, including cutting, welding, surface treatment, melting, and annealing. Such torches include an electrode that supports an arc that extends from the electrode to the workpiece in a transferred arc mode of operation. It is also conventional to surround the arc with a swirling vortex flow of gas, and in some torch designs it is conventional to also envelop the gas and arc with a swirling jet of water.

The electrode used in conventional torches of the described type typically comprises an elongate tubular member composed of a material of high thermal conductivity, such as copper or a copper alloy. One conventional copper alloy includes 0.5% of tellurium (tellurium has a melting temperature of 449.5°C (841°F)) to provide better machinability than pure copper. The forward or discharge end of the tubular electrode, known as a "holder", includes a bottom end wall having an emissive element embedded therein which supports the arc. The emissive element is composed of a material that has a relatively low work function, which is defined in the art as the potential step, measured in electron volts (eV), which permits thermionic emission from the surface of a metal at a given temperature. In view of its low work function, the emissive element is thus capable of readily emitting electrons when an electrical potential is applied thereto. Commonly used emissive materials include hafnium, zirconium, tungsten, and their alloys.

Some electrodes include a relatively non-emissive member or "separator", which is disposed about the emissive element and acts to prevent the arc from migrating from the emissive element to the copper holder. These non-emissive members are discussed in U.S. Patent No, 5,023,425 to Severance . The thermal conductivity of electrodes is important for removing heat generated by the arc, which increases the usable life of the electrode. As such, the non-emissive member is also preferably formed from a highly thermally conductive metal, such as silver or silver alloys.

Many conventional electrodes are assembled by pressing the emissive insert into the metallic holder, or by pressing the emissive insert into the non-emissive member which is then pressed into the metallic holder. The interfaces between the press-fit emissive element, non-emissive member, and holder can negatively affect the thermal conductivity of the assembled electrode by creating a "step" in the thermal conductivity at the interface of adjoining parts. This is especially true where the adjoining surfaces do not fit together very closely. An example of a press-fit electrode assembly is disclosed in US 6,114,650. Brazing is sometimes used to ensure sufficient thermal and electrical conduction. An example of a brazed electrode assembly is disclosed in US5097111, which is considered the closest prior art for the invention. However, the use of brazing materials adds additional steps to the manufacture of an electrode, and brazing materials typically have a low melting point, which is disadvantageous when attempting to bond to the emissive element, as discussed below.

In order to help thermal conduction over the interfaces of the emissive element, non-emissive member, and holder, the assignee of the present invention has developed a diffusion bonding technique described in a co-pending application with serial no. 09/773,847 ("the '847 application") entitled "Electrode Diffusion Bonding" and published as US 2002 139 788. In the co-pending '847 application, a post-assembly heating step is described that creates a diffusion bond between the non-emissive member and the metallic holder. The diffusion bond softens or smoothes the thermal interface between the two materials, while increasing the bond strength therebetween. As a result, the electrode has a longer operational life.

In the co-pending patent application no. 09/871,071 ("the '071 application"), published as US 6433300 the assignee of the present invention has discovered that it is also sometimes desirable to improve the bond between the emissive element and non-emissive member by heating. The post-assembly heating step of the co-pending '847 application is particularly advantageous for improving the bond between materials such as silver (in the case of the non-emissive member) and copper (in the case of the holder), but the relatively high temperature resistance of the emissive element (which is typically hafnium) may cause the bond between the non-emissive member and the holder to be destroyed if any heat treatment of the emissive element was attempted. As set forth in the '071 application, a two stage assembly and heating process is provided wherein strong bonds are formed between the emissive element and non-emissive member and between the non-emissive member and metallic holder.

In particular, an emissive element, such as hafnium, is positioned in a non-emissive member, such as silver, and is heated to a temperature of between about 926°C (1700°F) and 982°C (1800°F) such that an intermetallic compound is formed between the hafnium and silver, thereby creating a strong and conductive bond. Thereafter, the emissive element and non-emissive member are bonded to a holder, such as copper, by way of a heating step that forms a eutectic alloy between the copper holder and the silver member. This heating step typically occurs between about 760°C (1800°F) and 788°C (1450°F). In particular, when copper and silver are heated together, a eutectic melting point is achieved (which is lower than the melting point of both pure silver and pure copper) at about 778°C (1432°F). This second heating process forms a strong and conductive thermal bond between the holder and the non-emissive member such that the resulting electrode includes thermal bonds between both the hafnium emissive element and the silver non-emissive member, and between the silver non-emissive member and the copper holder. Such an arrangement greatly enhances the thermal conductivity of the electrode by bonding the base materials of the components, which allows heat to be readily removed from the arc emitting element and thereby enhances the operational life of the electrode.

However, with the method of the '071 application, the heating steps for forming thermal bonds between the emissive element and the non-emissive member, and between the non-emissive member and the holder are conducted separately. In other words, the relatively low eutectic melting point between a silver member and a copper holder prevents heating to the much higher temperature that is necessary to form thermal bonds between the emissive element and the non-emissive member. The eutectic alloy formed between the silver member and the copper holder will simply melt away or evaporate if raised to a suitable hafnium/silver bonding temperature, leaving voids between the two members and preventing adequate thermal conduction.

In addition, the eutectic reaction that occurs between silver and copper occurs very rapidly at the eutectic temperature. Thus, if the heating process goes beyond the eutectic temperature for even a short period of time, the silver and copper can quickly intermix and destroy the other advantageous properties of those materials, such as the non-emissivity of silver. On a commercial production basis, the tight temperature tolerances can be difficult to achieve and consistent manufacture is challenging.

Thus, separate heating steps, as presented in an embodiment of the invention of the '071 application, cause expense and delay in manufacturing costs that would desirably be avoided. In addition, the copper/silver eutectic reaction can be difficult to control on a commercial scale. Thus, there is a need in the industry for an electrode of the general type discussed above wherein only one heating step is required to form thermal bonding between the non-emissive member and the holder and, if desired, between the emissive element and the non-emissive member. In addition, there is a need for a method of commercial manufacture that easily accommodates thermal bonding between the non-emissive separator and the holder.

### SUMMARY OF THE INVENTION

The present invention meets these objectives and others by the use of a third metal, such as nickel, at the interface of the copper holder and silver non-emissive member. In a particular embodiment, the copper of the holder is alloyed with nickel, which attenuates the eutectic reaction between the silver and the copper. The nickel causes the eutectic reaction to be slowed such that a thermal bond can be formed between the holder and the non-emissive member at a higher temperature than the eutectic temperature of pure silver and pure copper. This bond can be formed over a greater temperature range and during a higher-temperature heating step that can be used also to form thermal bonding between the hafnium emissive element and the silver non-emissive member. As a result, electrodes according to the present invention can advantageously be formed with bonding both between the non-emissive member and the holder and between the emissive element and the non-emissive member during only one heating cycle.

The third metal can be alloyed in the metallic holder and/or can also be alloyed in the metal of the non-emissive member. A preferred composition is about 10% nickel by weight of the metallic holder with the remainder comprising copper. However, it is not necessary for the third metal to be alloyed, and either of the adjoining components can instead be plated. In addition, the third metal can be presented in powdered form between the non-emissive member and the holder, or by way of a thin sleeve that surrounds the non-emissive member and separates the non-emissive member from the holder. In addition, it is not necessary that the third metal comprises nickel and it may comprise at least one of the group consisting of zinc, iron, cobalt and chromium. The first metal may also comprise sterling silver.

Thus, the present invention provides electrodes and methods of making electrodes having stronger bonds between the elements thereof, which improves the strength and operational life span of the electrodes. In particular, these electrodes can be manufactured inexpensively and relatively quickly with only a single heating step. Furthermore, the methods of making electrodes according to the present invention allow the formation of electrodes that do not require brazing materials between the emissive element, non-emissive member, or metallic holder.

### BRIEF DESCRIPTION OF THE DRAWINGS

Having thus described the invention in general terms, reference will now be made to the accompanying drawings, which are not necessarily drawn to scale, wherein:
Figure 1 is a sectioned side elevational view of a plasma arc torch which embodies the features of the present invention;
Figure 2 is an enlarged perspective view of an electrode in accordance with the present invention;
Figure 3 is an enlarged sectional view of an electrode in accordance with the present invention;
Figures 4 illustrates a heating step of a preferred method of fabricating the electrode in accordance with the invention;
Figure 5 is a greatly enlarged sectional photograph of the electrode of the present invention seen along lines 5--5 of Figure 3;
Figure 6 is a greatly enlarged sectional photograph of the electrode of the present invention as seen along lines 6--6 of Figure 3;
Figure 7 is an alternative embodiment of the invention;
Figure 8 is another alternative embodiment of the invention; and
Figure 9 is yet another alternative embodiment of the invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention which is defined by the claims, to those skilled in the art. Like numbers refer to like elements throughout.

### ELECTRODE CONSTRUCTION

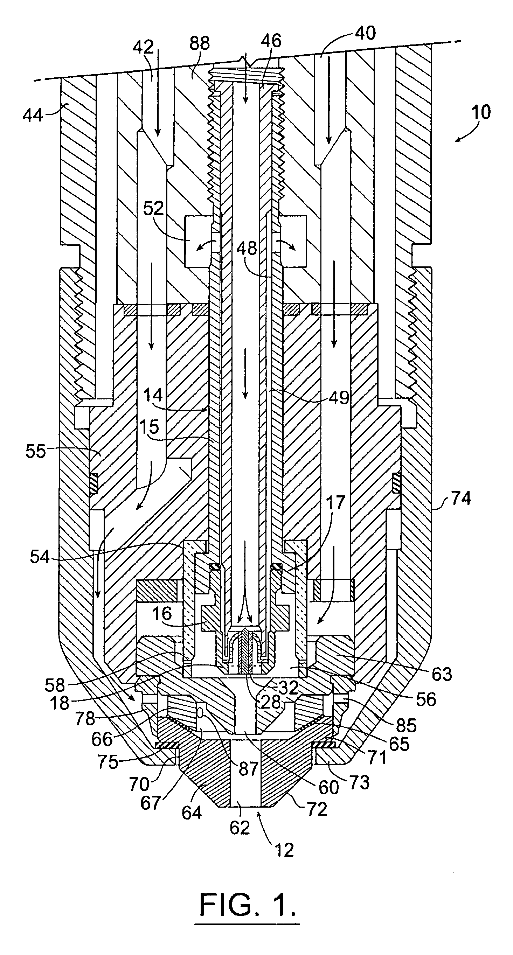

With reference to Figures 1-3, a plasma arc torch **10** embodying the features of the present invention is depicted. The torch **10** includes a nozzle assembly **12** and a tubular electrode **14**. The electrode **14** preferably is made of copper or a copper alloy as discussed below, and is composed of an upper tubular member **15** and a lower cup-shaped member or holder **16**. The upper tubular member **15** is of elongate open tubular construction and defines the longitudinal axis of the torch **10**. The upper tubular member **15** includes an internally threaded lower end portion **17**. The holder **16** is open at the rear end **19** thereof such that the holder is of cup-shaped configuration and defines an internal cavity **22**. A generally cylindrical cavity is formed in the front end of the holder **16**. A relatively non-emissive member **32** is positioned in the cylindrical cavity and is disposed coaxially along the longitudinal axis.

An emissive element or insert **28** is positioned in the non-emissive member **32** and is disposed coaxially along the longitudinal axis. More specifically, the emissive element **28** and the non-emissive member **32** form an assembly wherein the emissive element is secured to the non-emissive member. An intermetallic compound, which is effected by heating the emissive element and the separator, can be interposed therebetween as discussed more fully below. The emissive element **28** is composed of a metallic material having a relatively low work function, such as in a range of about 2.7 to 4.2 eV, so as to be capable of readily emitting electrons upon an electrical potential being applied thereto. Suitable examples of such materials are hafnium, zirconium, tungsten, and mixtures thereof.

The relatively non-emissive member **32** is composed of a metallic material having a work function that is greater than that of the material of the holder **16**, according to values presented in Smithells Metal Reference Book, 6th Ed. More specifically, it is preferred that the non-emissive member **32** be composed of a metallic material having a work function of at least about 4.3 eV. The non-emissive member 32 comprises silver . The selected material for the separator **32** should have high thermal conductivity, high resistance to oxidation, high melting point, high work function, and low cost. Although it is difficult to maximize all of these properties in one material, silver is preferred due to its high thermal conductivity.

For example, in one particular embodiment of the present invention, the non-emissive member **32** is composed of a silver alloy material comprising silver alloyed with about 0.25 to 10 percent of an additional material selected from the group consisting of copper, aluminum, iron, lead, zinc, and alloys thereof. The additional material may be in elemental or oxide form, and thus the term "copper" as used herein is intended to refer to both the elemental form as well as the oxide form, and similarly for the terms "aluminum" and the like. Sterling silver is a particularly preferred material (which has a melting point of about 1640°F) because it has a "plastic stage" during heating that can promote bonding with a hafnium emissive element **28**. In addition, the non-emissive member **32** is either machined from a solid blank, or formed from compressed powder, such as a silver/nickel mixture.

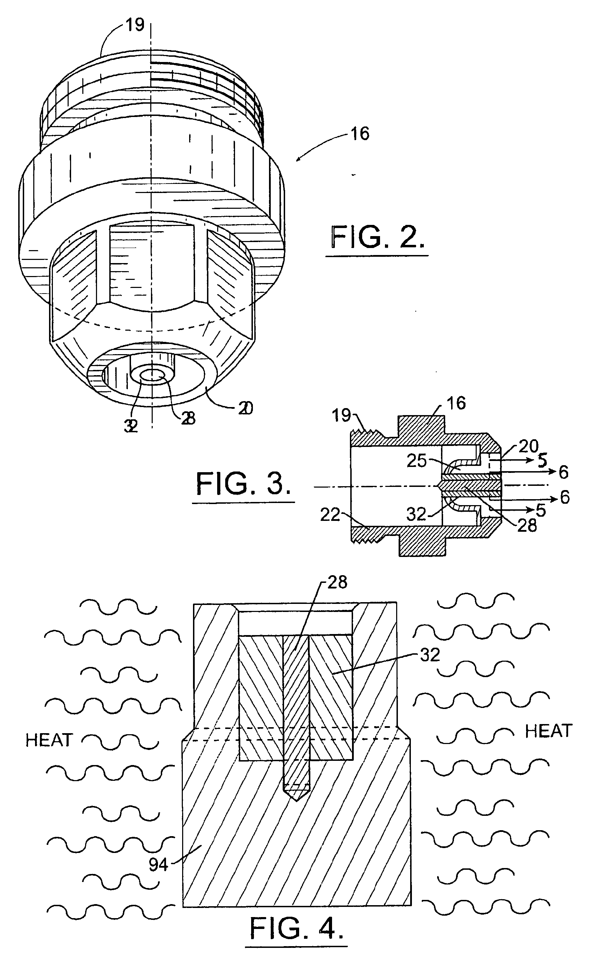

As shown in Figure 4, a generally cylindrical blank **94** of copper or, in one preferred embodiment, copper alloy is provided having a generally cylindrical bore formed therein such as by drilling in the front face along the longitudinal axis so as to form the cavity described above. The emissive element **28** and non-emissive member **32** can then be assembled into the holder blank **94**. It is not necessary that these components be assembled in the configuration shown in Figure 4 in a particular order and, for example, the non-emissive member **32** and emissive element **28** can first be assembled with each other and then positioned together in the blank **94**. Alternatively, the non-emissive member **32** can be first placed in the blank **94** and the emissive element **28** then placed in the non-emissive member. Nor is it necessary that the inner and outer diameters be formed so that an interference press-fit is obtained, although such a press-fit arrangement may be advantageous during subsequent heat treating (as discussed below) to avoid inadvertent disassembly of the various components.

The copper that is conventionally used in holders **16** of this type is advantageously alloyed, in one embodiment of the present invention, with nickel. While the amount of nickel that is employed in the copper alloy can be varied, it has been determined that nickel that is alloyed in the holder to at least about 5% by weight is a preferred composition. About 10% by weight is a particularly preferred composition (CDA706) and has a melting point of about 1149°C (2100°F). However, there are other compositions that could be used including 20%, 30% and even 60% nickel (Mone^{™}). Alloys known as "nickel-silvers" could also be used (these materials most often are copper/nickel/zinc alloys that do not contain any silver). Other elements such as iron and aluminum could also be added to the copper/nickel alloy. In addition, elements such as iron, cobalt or chromium may be used in place of the nickel to achieve the same effect discussed below.

After assembly, the components are then subjected to a heating cycle that heats the cylindrical blank **94**, non-emissive member **32** and emissive element **28**, and which results in improved properties and life span of the electrode. The heating process could also be performed after further machining steps are performed on the cylindrical blank **94**, as discussed below. The exact heating process is dependent on the material used in the emissive element **28**, the material used in the non-emissive member **32** and the material used for the holder **16**. An induction heating unit or a conventional furnace can be used to perform the heating process and an inert atmosphere, such as nitrogen, may be used during heating.

Even though pure silver has a melting point of 960°C (1761 °F) and pure copper has a melting point of 1084°C (1984°F), when the two materials are heated together, a eutectic reaction occurs which causes a liquid alloy to form at about 778°C (1432°F). This reaction can occur very quickly and, when this temperature is exceeded, the copper and silver readily migrate within each other, which can cause even more of a eutectic reaction and create an intermixed liquid phase. This intermixing can lead to decreased electrode performance because the non-emissive characteristic of the silver is lost.

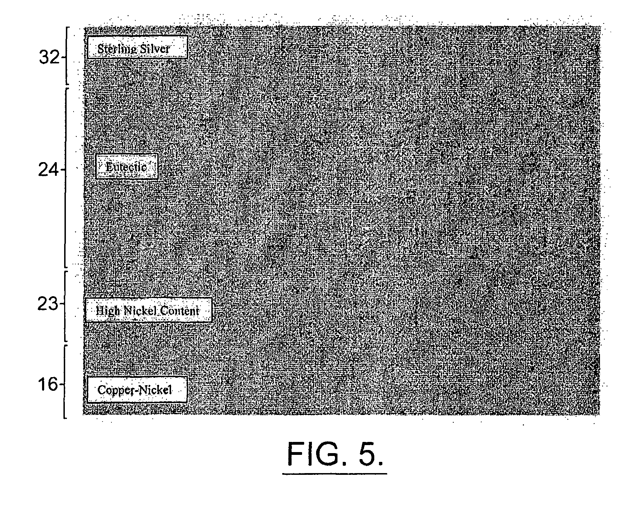

The inventors have discovered that when nickel is alloyed with the copper, the eutectic reaction attenuated and much higher heating temperatures can be achieved. A cross-sectional photograph of the resulting structure is shown in Figure 5. In this embodiment, the holder **16** is formed of a copper alloy having 10% nickel by weight alloyed therein. Pure nickel has a melting point of about 1455°C (2,651° F). The non-emissive member **32** is formed of sterling silver (which is 92.5% silver by weight and 7.5% copper). Between these two elements, two distinct phases can be seen. First, a region of high nickel content **23** is adjacent to the copper/nickel alloy of the holder **16**. A region of eutectic alloy **24** is seen between the region of high nickel content **23** and the sterling silver non-emissive member **32**. This region of eutectic alloy **24** contains mostly silver and copper, although may also include some nickel.

Although not wishing to be bound by theory, the inventors believe that, as the heating progresses, copper migrates from the holder **16** to the region of eutectic alloy **24** and leaves behind the nickel in the region of high nickel content **23**. This region of high nickel content **23** is believed to be important in controlling the rate that the copper/silver eutectic alloy forms. In particular, it is believed that the region of high nickel content **23** forms a barrier to more copper transfer into the region of eutectic alloy **24**, effectively slowing the reaction. This slows the exchange of both copper and silver into the region of eutectic alloy **24**. In addition, it is believed that, as the temperature is raised even further, the extra nickel adjacent to the region of eutectic alloy **24** progressively melts and joins the eutectic solution, which in turn raises the melting temperature of the solution. An alternative way to consider this phenomenon is to say that the solution is kept on the brink of solidifying. As an added benefit, copper/nickel alloy expands less than silver and copper during heating. Silver expands more than hafnium and so the copper/nickel helps to restrain the silver and does more to prevent the hole in the silver surrounding the hafnium from expanding than does a pure copper holder, thus maintaining better contact between the silver and the hafnium.

Even though the initial bond is formed very rapidly, the reaction slows markedly over time as the region of high nickel content **23** becomes thicker. Because of this characteristic, much flexibility can be provided when manufacturing electrodes according to this type. It has been determined that a temperature of at least about 799°C (1470°F) is necessary to begin the reaction, but beyond /\J that temperature there is not as much need for control compared to pure copper/silver electrodes. In particular, the electrode can be raised to a temperature of at least about 818°C (1505°F) for about one hour. At this temperature range and time combination, a thin intermetallic compound is formed between the emissive element **28** and the non-emissive member **32**. Of course, the thickness of any resultant intermetallic compound can be the result of many factors beyond furnace temperature, including electrode geometry and the duration of the heating cycle.

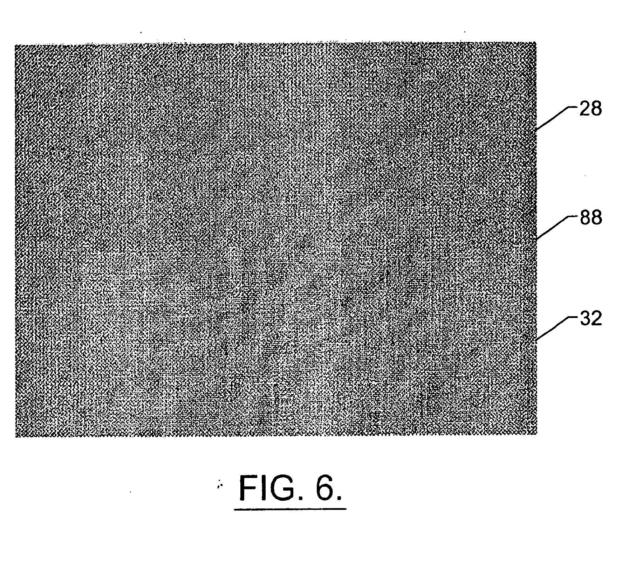

An intermetallic compound **88** between an emissive element **28** made of hafnium and a non-emissive member **32** made of silver is shown in Figure 6. The intermetallic compound **88** provides a strong bond between the emissive element **28** and the non-emissive member **32** and the thickness of the intermetallic compound shown is about 3.8 µm (0.00015"). The intermetallic compound 88 is a new material having unique properties different from both the materials forming the emissive element **28** and the non-emissive member **32**. Although not wishing to bound by theory, the intermetallic compound is believed to include both AgHf and AgHf₂.

It is not necessary in all cases for the electrode to have such an intermetallic compound formed, nor is the thickness of the intermetallic compound necessarily restricted to that illustrated in Figure 6. Depending in part on the current rating of the torch in which the electrode will be used, it may be more preferable not to have any intermetallic layer formed. In other torches, it can be advantageous to have an intermetallic compound layer having a thickness of about 5.1 µm (0.0002") , which can be formed at a temperature of about 796°C (1466°F) for one hour. At thicknesses above about 0.15-0.2mm (0.006"- 0.008"), the lifetime of the electrodes may actually be shortened because the thermal conductivity of the intermetallic compound is relatively high. As a result, increased thickness decreases the amount of thermal conduction and thus decreases electrode life.

Referring back to Figure 3, a cross-sectional view of a completed electrode according to the present invention is shown. To complete the fabrication of the holder **16** the rear face of the cylindrical blank **94** is machined to form an open cup-shaped configuration defining the cavity **22** therein. Advantageously, the cavity **22** is shaped so as to define a cylindrical post **25**. In other words, the internal cavity **22** is formed, such as by trepanning or other machining operation, to define the cylindrical post **25**. The external periphery of the cylindrical blank **94** is also shaped as desired, including formation of external threads at the rear end of the holder for connection to the torch as discussed below. Finally, the front face of the blank **94** and the end faces of the emissive element **28** and non-emissive member **32**, respectively, are machined so that they are substantially flat and flush with one another, as shown in Figure 3.

Advantageously, at least a portion of the non-emissive member **32** is exposed to the internal cavity **22**. As discussed below, the electrode is cooled by the circulation of a liquid cooling medium such as water, through the internal cavity **22**. The non-emissive member **32** is exposed during the trepanning or other machining operation to be in contact with the liquid cooling medium, which greatly enhances cooling of the electrode. The exposure of the non-emissive member **32** to the liquid cooling medium is especially advantageous when using a copper/nickel alloy for the holder **16** because the addition of nickel to the copper holder dramatically decreases the thermal conductivity of the resultant metal. In particular, if 10% nickel is alloyed into the copper holder, the thermal conductivity of the resultant alloy is lowered by approximately 90% relative to pure copper. However, because the highly thermally-conductive, silver non-emissive member **32** is directly exposed to the cooling water, heat can be conducted away from the emissive element **28** without all of the heat having to travel through the holder **16**.

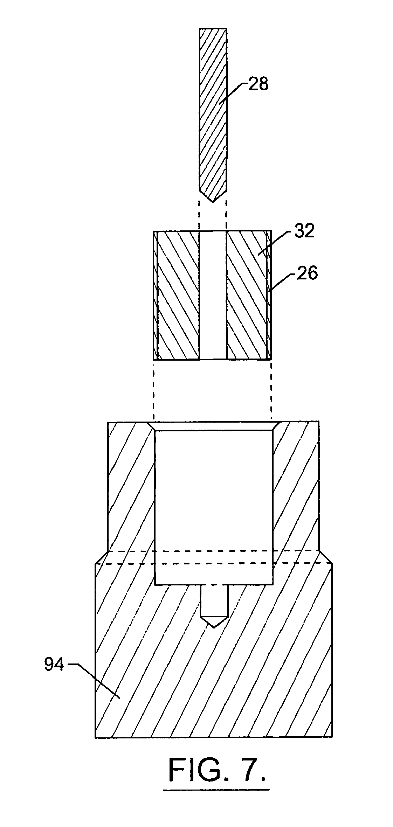

The favorable function of a third metal may be provided in other configurations such as, for example, when nickel is alloyed in the silver non-emissive member **32** and not the holder **16**. Further embodiments of the invention are illustrated in Figures 7, 8 and 9. In Figure 7, an embodiment is illustrated wherein a third metal for attenuating the eutectic reaction between copper and silver is provided in the form of a plating **26** on the outer surface of the non-emissive member **32**. In other words, it is not necessary for the nickel of the preceding embodiments to be alloyed in either the holder blank **94** or the non-emissive member **32**, and the same function may be achieved by a plating **26** of nickel on the outer surface of the non-emissive member **32** or, although not illustrated, on the inner surface of cylindrical cavity of the blank **94**.

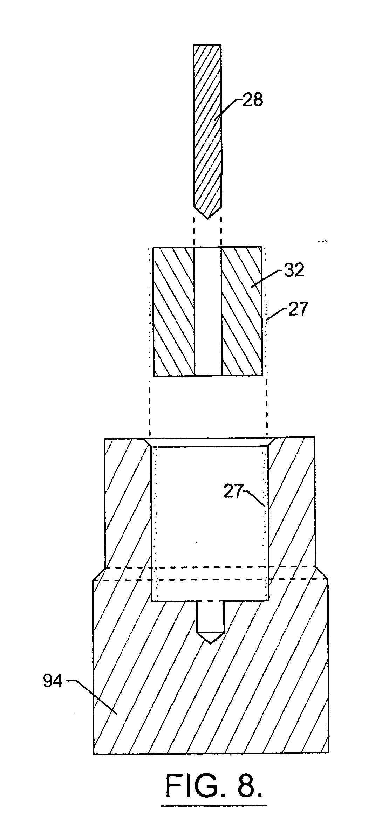

In Figure 8, the third metal is presented as a powder **27**, which is dispersed over the outer surface of the non-emissive member **32** and the inner surface of the blank **94**. Once again, in this embodiment, the third metal can be nickel and the non-emissive member **32** and the holder **94** are not necessarily alloyed with the third metal.

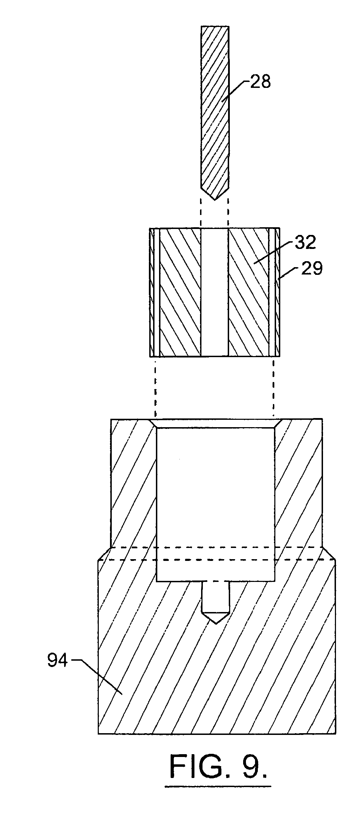

Finally, in Figure 9, the third metal is presented by way of a sleeve **29** that, once inserted in the blank **94**, surrounds and contacts the non-emissive member **32** and contacts the non-emissive member so as to separate it from the holder blank 94.

### TORCH CONSTRUCTION

With reference again to Figure 1, the electrode **14** is mounted in a plasma torch body **38**, which includes gas and liquid passageways **40** and **42**, respectively. The torch body **38** is surrounded by an outer insulated housing member **44**. A tube **46** is suspended within the central bore **48** of the electrode **14** for circulating a liquid cooling medium, such as water, through the electrode **14**. The tube **46** has an outer diameter smaller than the diameter of the bore **48** such that a space **49** exists between the tube **46** and the bore **48** to allow water to flow therein upon being discharged from the open lower end of the tube **46**. The water flows from a source (not shown) through the tube **46**, inside the internal cavity **22** and the holder **16**, and back through the space **49** to an opening **52** in the torch body **38** and to a drain hose (not shown). The passageway **42** directs injection water into the nozzle assembly **12** where it is converted into a swirling vortex for surrounding the plasma arc, as further explained below. The gas passageway **40** directs gas from a suitable source (not shown), through a gas baffle **54** of suitable high temperature material into a gas plenum chamber **56** via inlet holes **58**. The inlet holes **58** are arranged so as to cause the gas to enter in the plenum chamber **56** in a swirling fashion. The gas flows out of the plenum chamber **56** through coaxial bores **60** and **62** of the nozzle assembly **12**. The electrode **14** retains the gas baffle **54**. A high-temperature plastic insulator body **55** electrically insulates the nozzle assembly **12** from the electrode **14**.

The nozzle assembly **12** comprises an upper nozzle member **63** which defines the first bore **60**, and a lower nozzle member **64** which defines the second bore **62**. The upper nozzle member **63** is preferably a metallic material, and the lower nozzle member **64** is preferably a metallic or ceramic material. The bore **60** of the upper nozzle member **63** is in axial alignment with the longitudinal axis of the torch electrode **14**. The lower nozzle member **64** is separated from the upper nozzle member **63** by a plastic spacer element **65** and a water swirl ring **66**. The space provided between the upper nozzle member **63** and the lower nozzle member **64** forms a water chamber **67**.

The lower nozzle member **64** comprises a cylindrical body portion **70** that defines a forward or lower end portion and a rearward or upper end portion, with the bore **62** extending coaxially through the body portion **70**. An annular mounting flange **71** is positioned on the rearward end portion, and a frustoconical surface **72** is formed on the exterior of the forward end portion coaxial with the second bore **62**. The annular flange **71** is supported from below by an inwardly directed flange **73** at the lower end of the cup **74**, with the cup **74** being detachably mounted by interconnecting threads to the outer housing member **44**. A gasket **75** is disposed between the two flanges **71** and **73**.

The bore **62** in the lower nozzle member **64** is cylindrical, and is maintained in axial alignment with the bore **60** in the upper nozzle member **63** by a centering sleeve **78** of any suitable plastic material. Water flows from the passageway **42** through openings **85** in the sleeve **78** to the injection ports **87** of the swirl ring **66**, which injects the water into the water chamber **67**. The injection ports **87** are tangentially disposed around the swirl ring **66**, to impart a swirl component of velocity to the water flow in the water chamber **67**. The water exits the water chamber **67** through the bore **62**.

A power supply (not shown) is connected to the torch electrode **14** in a series circuit relationship with a metal workpiece, which is usually grounded. In operation, a plasma arc is established between the emissive element **28** of the electrode, which acts as the cathode terminal for the arc, and the workpiece, which is connected to the anode of the power supply and is positioned below the lower nozzle member **64**. The plasma arc is started in a conventional manner by momentarily establishing a pilot arc between the electrode **14** and the nozzle assembly **12**, and the arc is then transferred to the workpiece through the bores **60** and **62**.

Many modifications and other embodiments of the invention will come to mind to one skilled in the art to which this invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims which solely define and limit the claimed invention. Although specific terms are employed herein, they are used in a generic and descriptive sense only and not for purposes of limitation.

## Claims

1. An electrode (14) for supporting an arc in a plasma arc torch, said electrode comprising:
an emissive element (28) comprising an emissive material and defining a front surface for supporting the arc;
a relatively non-emissive member (32) comprising a first metal including silver and which is positioned to circumscribe the front surface of the emissive element, the non-emissive member being machined from a solid blank or formed from compressed powder so as to define a receptacle for receiving the emissive element (28) therein;
a metallic holder (16) for holding the non-emissive member (32) and defining an interface therewith where the non-emissive member is thermally bonded to the metallic holder, the metallic holder comprising a second metal including copper; **characterized in that**:
the thermal bonding of the non-emissive member (32) to the metallic holder (16) is brazeless and creates therebetween a region of eutectic alloy (24) of the copper and the silver; and
a third metal is present at the interface of the metallic holder (16) and the non-emissive member (32), the third metal comprising at least one of the group consisting of nickel, zinc, iron, cobalt, and chromium, and being operable for attenuating the eutectic reaction between the silver and the copper when the metallic holder and non-emissive member are thermally bonded together.

2. An electrode as defined in Claim 1 wherein the third metal is alloyed in at least one of the non-emissive member (32) and the metallic holder (16).

3. An electrode as defined in Claim 1 wherein the third metal is alloyed in the metallic holder (16).

4. An electrode as defined in Claim 3 wherein the third metal is nickel which is alloyed in the metallic holder (16) to at least about 5% by weight.

5. An electrode as defined in Claim 4 wherein the nickel is about 10% by weight of the metallic holder (16).

6. An electrode as defined in Claim 1 wherein the third metal is in a powdered form.

7. An electrode as defined in Claim 1 wherein the third metal is plated on an outer surface of the non-emissive member (32).

8. An electrode as defined in Claim 1 wherein the third metal is in the form of a separator member (29) positioned around the non-emissive member (32).

9. An electrode as defined in one of Claims 2, 3, 6, 7, or 8 wherein the third metal comprises nickel.

10. An electrode as defined in one of Claims 2, 3, 6, 7, or 8 wherein the third metal comprises at least one of the group consisting of zinc, iron, cobalt and chromium.

11. An electrode as defined in Claim 1 wherein the first metal comprises sterling silver.

12. An electrode as defined in Claim 1, wherein the copper comprises a major portion of the metallic holder (16), and wherein the third metal comprises nickel and the nickel is alloyed with the copper to form the metallic holder (16).

13. An electrode as defined in Claim 12 wherein the metal alloy of the metallic holder (16) comprises at least about 5% nickel by weight.

14. An electrode as defined in Claim 13 wherein the nickel is about 10% by weight of the metallic holder (16).

15. An electrode as defined in Claim 1 wherein the metallic holder (16) is formed of a metal alloy of the second and third metals, wherein the third metal comprises a minor portion of the metal alloy of the metallic holder (16).

16. An electrode as defined in Claim 1 wherein the electrode (14) defines a rear cavity (22) and wherein the non-emissive member (32) defines at least part of the rear cavity.

17. A method of fabricating an electrode (14) adapted for supporting an arc in a plasma arc torch, said method comprising the steps of:
individually forming each of
an emissive element (28) comprising an emissive material and defining a front surface for supporting the arc;
a relatively non-emissive member (32) comprising a first metal including silver and being machined from a solid blank or formed from a compressed powder so as to define a receptacle for receiving the emissive element (28) therein; and
a metallic holder (16) defining a cavity (22) for holding the non-emissive member (32) and the emissive element (28), the metallic holder
comprising a second metal including copper; and
assembling the emissive element, the non-emissive member, and the metallic holder, the non-emissive member circumscribing the front surface of the emissive element; **characterized in that:**
the assembly is heated only once to a temperature sufficient to form brazeless thermal bonding between the peripheral surface of the emissive element (28) and the non-emissive member (32) and between the non-emissive member (32) and the metallic holder (16), the thermal bonding of the non-emissive member (32) to the metallic holder (16) creating therebetween a region of eutectic alloy (24) of the copper and the silver; and
a third metal is present at the interface of the metallic holder (16) and the non-emissive member (32), the third metal comprising at least one of the group consisting of nickel, zinc, iron, cobalt, and chromium, and being operable for attenuating the eutectic reaction between the silver and the copper when the metallic holder and non-emissive member are thermally bonded together.

18. A method of fabricating an electrode as defined in Claim 17 wherein the emissive element (28) is first placed in the non-emissive member (32) and the non-emissive member (32) is then placed in to the metallic holder (16).

19. A method of fabricating an electrode as defined in Claim 17 wherein the non-emissive member (32) is first placed into the metallic holder (16) and the emissive element (28) is then placed in the non-emissive member (32).

## Patentansprüche

1. Elektrode (14) zum Erhalten eines Lichtbogens in einem Plasma-Lichtbogenbrenner, wobei die Elektrode Folgendes umfasst:
ein emittierendes Element (28), das ein Emissionsmaterial umfasst und eine Frontfläche zum Erhalten des Lichtbogens definiert;
ein relativ nicht emittierendes Element (32), das ein erstes Metall einschließlich Silber umfasst und so positioniert ist, dass es die Frontfläche des emittierenden Elementes umschreibt, wobei das nicht emittierende Element aus einem massiven Rohling gearbeitet oder aus einem komprimierten Pulver geformt ist, um eine Fassung zur Aufnahme des emittierenden Elementes (28) darin zu definieren;
einen metallischen Halter (16) zum Halten des nicht emittierenden Elementes (32) und zum Definieren einer Grenzfläche damit, wobei das nicht emittierende Element mit dem metallischen Halter wärmeverschweißt ist, wobei der metallische Halter ein zweites Metall einschließlich Kupfer umfasst,
**dadurch gekennzeichnet, dass**:
das Wärmeverschweißen des nicht emittierenden Elementes (32) mit dem metallischen Halter (16) lötlos erfolgt und eine Region von eutektischer Legierung (24) des Kupfers und des Silbers dazwischen erzeugt; und
ein drittes Metall an der Grenzfläche zwischen dem metallischen Halter (16) und dem nicht emittierenden Element (32) vorhanden ist, wobei das dritte Metall wenigstens ein Element aus der Gruppe bestehend aus Nickel, Zink, Eisen, Kobalt und Chrom umfasst und die Aufgabe hat, die eutektische Reaktion zwischen dem Silber und dem Kupfer zu dämpfen, wenn der metallische Halter und das nicht emittierende Element miteinander wärmeverschweißt sind.

2. Elektrode nach Anspruch 1, wobei das dritte Metall in dem nicht emittierenden Element (32) und/oder dem metallischen Halter (16) legiert ist.

3. Elektrode nach Anspruch 1, wobei das dritte Metall in dem metallischen Halter (16) legiert ist.

4. Elektrode nach Anspruch 3, wobei das dritte Metall Nickel ist, das in dem metallischen Halter (16) aufwenigstens etwa 5 Gew.-% legiert ist.

5. Elektrode nach Anspruch 4, wobei das Nickel etwa 10 Gew.-% des metallischen Halters (16) ausmacht.

6. Elektrode nach Anspruch 1, wobei das dritte Metall in Pulverform vorliegt.

7. Elektrode nach Anspruch 1, wobei das dritte Metall auf eine Außenfläche des nicht emittierenden Elementes (32) plattiert ist.

8. Elektrode nach Anspruch 1, wobei das dritte Metall die Form eines Trennelementes (29) hat, das um das nicht emittierende Element (32) herum positioniert ist.

9. Elektrode nach Anspruch 2, 3, 6, 7 oder 8, wobei das dritte Metall Nickel umfasst.

10. Elektrode nach Anspruch 2, 3, 6, 7 oder 8, wobei das dritte Metall wenigstens ein Element aus der Gruppe bestehend aus Zink, Eisen, Kobalt und Chrom umfasst.

11. Elektrode nach Anspruch 1, wobei das erste Metall Sterlingsilver umfasst.

12. Elektrode nach Anspruch 1, wobei das Kupfer einen größeren Teil des metallischen Halters (16) umfasst und wobei das dritte Metall Nickel umfasst und das Nickel mit dem Kupfer zur Bildung des metallischen Halters (16) legiert ist.

13. Elektrode nach Anspruch 12, wobei die Metalllegierung des metallischen Halters (16) wenigstens etwa 5 Gew.-% Nickel umfasst.

14. Elektrode nach Anspruch 13, wobei das Nickel etwa 10 Gew.-% des metallischen Halters (16) ausmacht.

15. Elektrode nach Anspruch 1, wobei der metallische Halter (16) aus einer Metalllegierung des zweiten und des dritten Metalls gebildet ist, wobei das dritte Metall einen geringeren Teil der Metalllegierung des metallischen Halters (16) umfasst.

16. Elektrode nach Anspruch 1, wobei die Elektrode (14) einen hinteren Hohlraum (22) definiert und wobei das nicht emittierende Element (32) wenigstens einen Teil des hinteren Hohlraums definiert.

17. Verfahren zur Herstellung einer Elektrode (14) zum Erhalten eines Lichtbogens in einem Plasma-Lichtbogenbrenner, wobei das Verfahren die folgenden Schritte beinhaltet:
individuelles Ausbilden jeweils
eines emittierenden Elementes (28), das ein emittierendes Material umfasst und eine Frontfläche zum Erhalten des Lichtbogens definiert;
eines relativ nicht emittierenden Elementes (32), das ein erstes Metall einschließlich Silber umfasst und aus einem massiven Rohling gearbeitet oder aus einem komprimierten Pulver gebildet ist, um eine Fassung zur Aufnahme des emittierenden Elementes (28) darin zu definieren; und
eines metallischen Halters (16), der einen Hohlraum (22) zum Halten des nicht emittierenden Elementes (32) und des emittierenden Elementes (28) definiert, wobei der metallische Halter ein zweites Metall einschließlich Kupfer umfasst und
Zusammensetzen des emittierenden Elementes, des nicht emittierenden Elementes und des metallischen Halters, wobei das nicht emittierende Element die Frontfläche des emittierenden Elementes umschreibt; **dadurch gekennzeichnet, dass**:
die Baugruppe nur einmal auf eine Temperatur erhitzt wird, die ausreicht, um eine lötlose Wärmeverschweißung zwischen der Umfangsfläche des emittierenden Elementes (28) und dem nicht emittierenden Element (32) sowie zwischen dem nicht emittierenden Element (32) und dem metallischen Halter (16) zu bilden, wobei das Wärmeverschweißen des nicht emittierenden Elementes (32) mit dem metallischen Halter (16) die Erzeugung einer Region von eutektischer Legierung (24) aus dem Kupfer und dem Silber dazwischen erzeugt; und
ein drittes Metall an der Grenzfläche zwischen dem metallischen Halter (16) und dem nicht emittierenden Element (32) vorhanden ist, wobei das dritte Metall wenigstens ein Element aus der Gruppe bestehend aus Nickel, Zink, Eisen, Kobalt und Chrom umfasst und die Aufgabe hat, die eutektische Reaktion zwischen dem Silber und dem Kupfer zu dämpfen, wenn der metallische Halter und das nicht emittierende Element miteinander wärmeverschweißt sind.

18. Verfahren zur Herstellung einer Elektrode gemäß Definition in Anspruch 17, wobei das emittierende Element (28) zunächst in dem nicht emittierenden Element (32) platziert wird und das nicht emittierende Element (32) dann in den metallischen Halter (16) gesetzt wird.

19. Verfahren zur Herstellung einer Elektrode gemäß Definition in Anspruch 17, wobei das nicht emittierende Element (32) zunächst in den metallischen Halter (16) und das emittierende Element (28) dann in das nicht emittierende Element (32) gesetzt wird.

## Revendications

1. Electrode (14) pour supporter un arc dans une torche à arc plasma, ladite électrode comprenant:
un élément émissif (28) comprenant un matériau émissif et définissant une surface avant pour supporter l'arc;
un élément relativement non émissif (32) comprenant un premier métal incluant de l'argent et qui est positionné de manière à circonscrire la surface avant de l'élément émissif, l'élément non émissif étant usiné à partir d'une ébauche solide ou étant formé à partir de poudre comprimée de manière à définir un réceptacle pour recevoir l'élément émissif (28) dedans;
un support métallique (16) pour supporter l'élément non émissif (32) et définir une interface avec, où l'élément non émissif est lié thermiquement au support métallique, le support métallique comprenant un second métal incluant du cuivre,
**caractérisé en ce que**:
la liaison thermique de l'élément non émissif (32) sur le support métallique (16) est sans brasure et crée entre eux une région d'alliage eutectique (24) du cuivre et de l'argent; et
un troisième métal est présent au niveau de l'interface du support métallique (16) et de l'élément non émissif (32), le troisième métal comprenant au moins un élément pris parmi le groupe comprenant nickel, zinc, fer, cobalt et chrome, et pouvant fonctionner pour atténuer la réaction eutectique entre l'argent et le cuivre lorsque le support métallique et l'élément non émissif sont liés thermiquement ensemble.

2. Electrode selon la revendication 1, dans laquelle le troisième métal est constitué en alliage dans au moins un élément pris parmi l'élément non émissif (32) et le support métallique (16).

3. Electrode selon la revendication 1, dans laquelle le troisième métal est constitué en alliage dans le support métallique (16).

4. Electrode selon la revendication 3, dans laquelle le troisième métal est du nickel qui est constitué en alliage dans le support métallique (16) selon au moins environ 5% en poids.

5. Electrode selon la revendication 4, dans laquelle le nickel représente environ 10% en poids du support métallique (16).

6. Electrode selon la revendication 1, dans laquelle le troisième métal est sous une forme pulvérulente.

7. Electrode selon la revendication 1, dans laquelle le troisième métal est plaqué sur une surface externe de l'élément non émissif (32).

8. Electrode selon la revendication 1, dans laquelle le troisième métal est sous la forme d'un élément de séparateur (29) positionné autour de l'élément non émissif (32).

9. Electrode selon l'une quelconque des revendications 2, 3, 6, 7 ou 8, dans laquelle le troisième métal comprend du nickel.

10. Electrode selon l'une quelconque des revendications 2, 3, 6, 7 ou 8, dans laquelle le troisième métal comprend au moins un élément pris parmi le groupe comprenant zinc, fer, cobalt et chrome.

11. Electrode selon la revendication 1, dans laquelle le premier métal comprend de l'argent sterling.

12. Electrode selon la revendication 1, dans laquelle le cuivre constitue une partie principale du support métallique (16), et dans laquelle le troisième métal comprend du nickel et le nickel est allié avec le cuivre pour former le support métallique (16).

13. Electrode selon la revendication 12, dans laquelle l'alliage métallique du support métallique (16) comprend au moins environ 5% de nickel en poids.

14. Electrode selon la revendication 13, dans laquelle le nickel représente environ 10% en poids du support métallique (16).

15. Electrode selon la revendication 1, dans laquelle le support métallique (16) est formé à partir d'un alliage métallique des second et troisième métaux, dans laquelle le troisième métal comprend une partie mineure de l'alliage métallique du support métallique (16).

16. Electrode selon la revendication 1, dans laquelle l'électrode (14) définit une cavité arrière (22) et dans laquelle l'élément non émissif (32) définit au moins une partie de la cavité arrière.

17. Procédé de fabrication d'une électrode (14) adaptée pour supporter un arc dans une torche à arc plasma, ledit procédé comprenant les étapes de:
formation de façon individuelle de chaque élément pris parmi:
un élément émissif (28) comprenant un matériau émissif et définissant une surface avant pour supporter l'arc;
un élément relativement non émissif (32) comprenant un premier métal incluant de l'argent et qui est usiné à partir d'une ébauche solide ou qui est formé à partir de poudre comprimée de manière à définir un réceptacle pour recevoir l'élément émissif (28) dedans; et
un support métallique (16) définissant une cavité (22) pour supporter l'élément non émissif (32) et l'élément émissif (28), le support métallique comprenant un second métal incluant du cuivre; et
assemblage de l'élément émissif, de l'élément non émissif et du support métallique, l'élément non émissif circonscrivant la surface avant de l'élément émissif,
**caractérisé en ce que**:
l'assemblage est chauffé seulement une fois jusqu'à une température suffisante pour former une liaison thermique sans brasure entre la surface périphérique de l'élément émissif (28) et l'élément non émissif (32) ainsi qu'entre l'élément non émissif (32) et le support métallique (16), la liaison thermique de l'élément non émissif (32) sur le support métallique (16) créant entre une région d'alliage eutectique (24) du cuivre et de l'argent; et
un troisième métal est présent au niveau de l'interface du support métallique (16) et de l'élément non émissif (32), le troisième métal comprenant au moins un élément pris parmi le groupe comprenant nickel, zinc, fer, cobalt et chrome et pouvant fonctionner pour atténuer la réaction eutectique entre l'argent et le cuivre lorsque le support métallique et l'élément non émissif sont liés thermiquement ensemble.

18. Procédé de fabrication d'une électrode selon la revendication 17, dans lequel l'élément émissif (28) est en premier lieu placé dans l'élément non émissif (32) et l'élément non émissif(32) est ensuite placé dans le support métallique (16).

19. Procédé de fabrication d'une électrode selon la revendication 17, dans lequel l'élément non émissif (32) est en premier lieu placé à l'intérieur du support métallique (16) et l'élément émissif (28) est ensuite placé dans l'élément non émissif (32).
